(19) Europäisches Patentamt / European Patent Office / Office européen des brevets

(11) **EP 4 389 831 A1**

(12) **EUROPEAN PATENT APPLICATION**
published in accordance with Art. 153(4) EPC

(43) Date of publication:
**26.06.2024 Bulletin 2024/26**

(21) Application number: **21954929.2**

(22) Date of filing: **21.08.2021**

(51) International Patent Classification (IPC):
***C09D 11/037*** (2014.01)   ***C09B 57/00*** (2006.01)
***C09B 67/20*** (2006.01)

(52) Cooperative Patent Classification (CPC):
**C09B 57/00; C09B 67/006; C09D 11/037**

(86) International application number:
**PCT/JP2021/030697**

(87) International publication number:
**WO 2023/026311 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Matsui Shikiso Chemical Co., Ltd.**
**Kyoto-shi**
**Kyoto 607-8345 (JP)**

(72) Inventors:
• **KITAGAWA, Yosuke**
  **Kyoto-shi Kyoto 607-8345 (JP)**
• **SHIRAMATSU, Yuto**
  **Kyoto-shi Kyoto 607-8345 (JP)**
• **MIZUHARA, Tomohiro**
  **Kyoto-shi Kyoto 607-8345 (JP)**

(74) Representative: **Weickmann & Weickmann PartmbB**
**Postfach 860 820**
**81635 München (DE)**

(54) **COLOR CHANGE MATERIALS AND COLOR-CHANGING COLORANT**

(57) Provided are color change materials and a color-changing colorant which are able to be changed in color by water or a water-containing liquid and which are effectively usable for detecting water or a water-containing liquid. One of the color change materials is a composition comprising three hydrophilic components, that are an electron-donating coloring organic compound, an electron-receiving compound, and a coloring regulator serving to inhibit the coloring attributable to both the electron-donating coloring organic compound and the electron-receiving compound, and a fixing material comprising an oleophilic fixer for fixation to a desired object, the color change material being able to be changed in color by water or a water-containing liquid. The color-changing colorant comprises a given fine object and, held or supported thereon, a color-changing composition comprising the three components and being able to be changed in color by water or a water-containing liquid, the color-changing colorant being able to be changed in color by water or a water-containing liquid. The other color change material comprises the color-changing colorant and the fixing material and is able to be changed in color by water or a water-containing liquid.

EP 4 389 831 A1

## Description

[FIELD OF THE INVENTION]

The present invention relates to a color-changing material and a color-changeable colorant that can change their colors in the presence of water or a water-containing liquid.

[BACKGROUND ART]

As an ink composition or a color developing composition for water indicators or condensation indicators, for example, the following is disclosed.

JP 2003-183546 A discloses an ink composition for water indicators mainly including: a resin obtained by graft polymerization of polyvinylpyrrolidone so as to contain an alkyl group having 2 to 22 carbon atoms in an amount of 1 to 80% by weight with respect to the entire resin; and/or a resin obtained by graft polymerization of at least one selected from the group consisting of olefin oxide, glycidyl ether, glycidyl ester, or glycidic acid ester having an alkyl group having 2 to 22 carbon atoms on one side to an OH group at a terminal of a hydrophilic group of hydroxyethyl cellulose and/or hydroxypropyl cellulose; and a pigment as a colorant.

In the water indicator ink, the contact with water can be visually recognized as ink coating of a printed indicator portion is dissolved by the water and a pattern collapses.

JP 2005-185643 A discloses a water indicator ink composition containing at least an ink binder, a colorant that develops color by the action of a color developer comprising a basic substance in the presence of water, and a pH adjuster, which functions as an indicator for urine and water by printing the water indicator ink composition on a sheet having the color developer, so that the colorant does not flow out and a color tone is conspicuous.

JP 4607350 B1 discloses a condensation indicator in which a color-changing layer that is provided on an observation surface side of condensation water on a substrate and that contains a water-soluble dye of a powder being exposed is formed:

by 100 parts by weight of an ink containing 0.01 to 20 parts by weight of the water-soluble dye, an ink vehicle comprising 3 to 9 parts by weight of a hydrophobic resin selected from a polyester resin, an acrylic resin, a polyamide resin, a polyacetal resin, a polyurethane resin, an epoxy resin, a petroleum resin, a polyvinyl chloride resin, a ketone resin, and a cellulose resin that diffuse water condensed on a surface and the water-soluble dye dissolved in the water and an organic solvent that does not dissolve the water-soluble dye dissolved thereby, and 10 parts by weight of a shielding powder that is at least one selected from magnesium carbonate, barium carbonate, magnesium hydroxide, magnesium oxide, calcium oxide, titanium oxide, magnesium silicate, synthetic aluminum silicate, clay oxide, kaolin, bentonite, and sericite, which shields the water-soluble dye of the powder and is dyed with the water-soluble dye dissolved in the diffused water, in a film shape that changes color by the dyeing.

The condensation indicator develops a color when a water-soluble dye printed in a powder form is dissolved in water such as condensation, and the dye flows out and diffuses.

JP 6767021 B1 discloses an ink composition for water indicators containing a resin (A), a color-developing compound (B) that changes color according to the pH of a liquid in contact with the ink composition, and a hydrophilic solvent (C), in which the resin (A) is a resin having a quaternary ammonium base, and a water detection sheet including a liquid impermeable and moisture permeable sheet-shaped substrate, and a water detection portion printed on one surface of the sheet-shaped substrate and composed of the ink composition for water indicators.

That is, they are an ink composition for water indicators suitable for various printing methods such as a flexographic printing method and a gravure printing method, in which a color-developing compound is hardly eluted even after water detection, and a water detection portion excellent in adhesion to a substrate and designability can be formed, and a water detection sheet using the ink composition.

JP 5996400 B1 discloses a composition for water indicators, which composition contains an electron-donating color-developing organic compound, at least one kind selected from among acids having a phenolic hydroxyl group, acids having a hydroxyl group and a carboxyl group, and acids having a plurality of carboxyl groups, an aqueous and oil-soluble resin, cyclodextrin, and a solvent, in which the composition for water indicators is colorless after application to a substrate and before water detection but sufficiently develops a color when detecting water.

It is considered that this composition for water indicators contains cyclodextrin, thereby making it possible to suppress desensitization when a water-soluble and oil-soluble resin such as polyvinylpyrrolidone is used, to clarify the degree of color development and decoloration, and to allow easy visual confirmation.

In electronic equipment, electronic parts, precision equipment, and the like, it is required to reliably detect condensation and submersion at an early stage in order to prevent occurrence of troubles caused by condensation and submersion as much as possible or to quickly take countermeasures, and water detection for water management is also required in various other products. In addition, in paper diapers for infants and adults and various sanitary products, it is required to more accurately and quickly indicate replacement time and the like by water detection.

In this respect, the ink composition and the color developing composition for water indicators or condensation indicators are not necessarily considered to be sufficient.

[PRIOR ART DOCUMENTS]

[Patent Documents]

Patent Literature 1: JP 2003-183546 A
Patent Literature 2: JP 2005-185643 A
Patent Literature 3: JP 4607350 B1
Patent Literature 4: JP 6767021 B1
Patent Literature 5: JP 5996400 B1

[SUMMARY OF THE INVENTION]

[PROBLEMS TO BE SOLVED BY THE INVENTION]

An object of the present invention is to provide a color-changing material and a color-changeable colorant that can change their colors in the presence of water or a water-containing liquid and can be effectively used for detection of water or a water-containing liquid.

[MEANS OF SOLVING THE PROBLEMS]

The present invention can be described, for example, as follows.
(1) A color-changing material which is a composition comprising an electron-donating color-developing organic compound, an electron-accepting compound, and a color development regulator that hampers the color development by the electron-donating color-developing organic compound and the electron-accepting compound and has hydrophilicity, and a fixing material containing an oleophilic fixing agent for fixing to an object, in which the color-changing material can change its color in the presence of water or a water-containing liquid.

(2) The color-changing material as described in (1) above, which can change its color in the presence of water or a water-containing liquid in a state of being fixed to the object.

(3) The color-changing material as described in (1) or (2) above, in which the color development regulator has a solubility parameter ($\delta$) of 10 or more, and a difference in solubility parameter ($\delta$) between the electron-accepting compound and the color development regulator is between plus and minus 3.

(4) The color-changing material as described in any one of (1) to (3) above, in which the oleophilic fixing agent has a solubility parameter ($\delta$) of 12 or less.

(5) The color-changing material as described in any one of (1) to (4) above, in which 80% by weight or more of an oleophilic fixing agent having a solubility parameter ($\delta$) of 12 or less is contained in all fixing agents contained in the fixing material, and the electron-donating color-developing organic compound, the electron-accepting compound, and the color development regulator and the all fixing agents are uniformly mixed.

(6) The color-changing material as described in (5) above, in which the oleophilic fixing agent having a solubility parameter ($\delta$) of 12 or less is one kind or two or more kinds selected from the group consisting of an acrylic resin, a methacrylic resin, a urethane resin, a styrene-butadiene copolymer resin, an ethylene-vinyl acetate resin, a polyethylene resin, a styrene resin, a polyester resin, a petroleum resin, a rosin acid ester, a microstalline WAX, a paraffin WAX, and a polyethylene WAX.

(7) The color-changing material as described in any one of (1) to (6) above, in which the fixing material containing an oleophilic fixing agent is a vehicle in which the oleophilic fixing agent is dissolved or dissolved and dispersed in a volatile organic solvent.

(8) The color-changing material as described in (7) above, in which both the oleophilic fixing agent and the volatile organic solvent have a solubility parameter ($\delta$) of 12 or less.

(9) The color-changing material as described in (7) or (8) above, in which all fixing agents in the fixing material are dissolved or dissolved and dispersed in a volatile organic solvent having a boiling point of 200 degrees C or less, and 80% by weight or more of the volatile organic solvent having a boiling point of 200 degrees C or less and a solubility parameter ($\delta$) of 12 or less is contained in all volatile organic solvents contained in the fixing material.

(10) The color-changing material as described in any one of (1) to (9) above, which is a hot melt printing ink, an organic solvent evaporation drying printing ink, a thermosetting dry offset ink, or an electrostatic latent image developing toner.

(11) A color-changeable colorant comprising a color-changeable composition comprising at least an electron-donating color-developing organic compound, an electron-accepting compound, and a color development regulator that hampers the color development by the electron-donating color-developing organic compound and the electron-accepting compound and has hydrophilicity, that can change its color in the presence of water or a water-containing liquid,

in which the color-changeable composition is retained or carried by a specified microbody and can change its color in the presence of water or a water-containing liquid.

(12) The color-changeable colorant as described in (11) above, in which the specified microbody is such that water or a water-containing liquid can come into contact with the retained or carried color-changeable composition.

(13) The color-changeable colorant as described in (11) or (12) above, in which at least a portion of the specified microbody that retains or carries the color-changeable composition exhibits basicity or neutrality.

(14) The color-changeable colorant as described in any one of (11) to (13) above, in which the specified microbody is a porous substance.

(15) The color-changeable colorant as described in (14) above, in which the pore volume of the porous substance is not less than 0.3 cm$^3$/g.

(16) The color-changeable colorant as described in (14) or (15) above, in which the average pore diameter of the porous substance is not less than 20 angstroms.

(17) A color-changing material containing the color-changeable colorant as described in any one of (11) to (16) above and a fixing material containing an oleophilic fixing agent for fixing to an object, in which the color-changing material can change its color in the presence of water or a water-containing liquid.

(18) The color-changing material as described in (17) above, which can change its color in the presence of water or a water-containing liquid in a state of being fixed to the object.

(19) The color-changing material as described in (17) or (18) above, which is a hot melt printing ink, an organic solvent evaporation drying printing ink, a thermosetting dry offset ink, or an electrostatic latent image developing toner.

(20) An article formed by fixing the color-changing material that can change its color in the presence of water or a water-containing liquid as described in any one of (1) to (9) and (17) and (18) above.

[ADVANTAGEOUS EFFECT OF THE INVENTION]

Since the color-changing material and the color-changeable colorant of the present invention can change their colors in the presence of water or a water-containing liquid, they can be effectively used for detection of water or a water-containing liquid.

[MODES OF EMBODIMENT OF THE INVENTION]

Embodiments of the present invention are described below.

The color-changing material of the present invention can change its color in the presence of water or a water-containing liquid, and is a composition comprising an electron-donating color-developing organic compound, an electron-accepting compound, and a color development regulator that hampers the color development by the electron-donating color-developing organic compound and the electron-accepting compound and has hydrophilicity, and a fixing material containing an oleophilic fixing agent, in which the color-changing material can change its color in the presence of water or a water-containing liquid

Further, in the color-changeable colorant of the present invention, a color-changeable composition is retained or carried by a specified microbody and can change its color in the presence of water or a water-containing liquid. The color-changeable composition comprises at least an electron-donating color-developing organic compound, an electron-accepting compound, and a color development regulator that hampers the color development by the electron-donating color-developing organic compound and the electron-accepting compound and has hydrophilicity, and can change its color in the presence of water or a water-containing liquid.

In addition, another color-changing material of the present invention contains the color-changeable colorant of the present invention and a fixing material containing an oleophilic fixing agent, and can change its color in the presence of water or a water-containing liquid.

(1) An electron-donating color-developing organic compound and an electron-accepting compound can develop a color as electrons are donated and accepted therebetween; however, in the presence of a solvent as the third component, the bond of the electron-donating color-developing organic compound and the electron-accepting compound is broken, and the color disappears.

In the case of conventional ordinary thermochromic coloring matters, it is known that the electron bond is broken to make the color disappear when the oleophilic solvent as the third component is liquid above the melting point, and that the electron bond is formed by the electron donation and acceptance to develop a color when the solvent is solid under the melting point. Hence, the color changes reversibly as electron donation and acceptance occurs reversibly.

On the other hand, the present invention is based on a new finding that in a case of having three components: two components of an electron-donating color-developing organic compound and an electron-accepting compound that can develop a color as electrons are donated and accepted, added with a color development regulator that hampers color development by electron donation and acceptance therebetween, when the color development regulator has hydrophilicity, the effect of hampering color development is suppressed in the presence of water or a water-containing liquid to allow color development by the electron donation and acceptance between the electron-donating color-developing organic compound and the electron-accepting compound.

(2) Electron-donating color-developing compound

An electron-donating color-developing organic compound is a component that develops a color upon a color-developing reaction with an electron-accepting compound (color developer substance), a representative electron-donating color-developing organic compound is known as a leuco dye.

Examples of useful electron-donating color-developing organic compounds include, but are not limited to, leuco dyes known as pressure sensitive copying paper dyes or thermal recording paper dyes and traditionally known leuco dyes that constitute thermochromic composition.

Examples of useful electron-donating color-developing organic compounds include compounds of triphenylmethane phthalide series, fluoran series, phenothiazine series, indolyl phthalide series, leucoauramine series, spiropyran series, rhodamine lactam series, triphenylmethane series, triazene series, spirophthalane xanthene series, naphtholactam series, and azomethine series.

More specifically, electron-donating color-developing organic compounds include, but are not limited to, 3,6-dimethoxyfluoran, 3,6-dibutoxyfluoran, 3-diethylamino-7-chlorofluoran, 3-diethylamino-7-phenylaminofluoran, 3-chloro-6-phenylaminofluoran, 3-diethylamino-6,8-dimethylfluoran, 3-diethylamino-6-methyl-7-chlorofluoran, 3,3-bis(1-n-butyl-2-methyl-indol-3yl)phthalide, 3-(4-diethylaminophenol)-3-(1-ethyl-2-methylindol-3yl)phthalide, 3-(4-diethylamino-2-methyl)phenyl-3-(1,2-dimethylindol-3-yl)phthalide, 3-diethylamino-7,8-benzofuran, 6-(dimethylamino)-3,3-bis[4-(dimethylamino)phenyl]-1 (3H)-isobenzofuran, 3-(2-methyl-4diethylaminophenol)-3-(1-methyl-2-methylindol-3-yl)phthalide, 2-(N-phenyl-N-methylamino)-6-(N-p-tolyl-N-ethylamino)fluoran, 3-(4-diethylamino-2-ethoxyphenol)-3-(1-ethyl-2-methoxyindol-3-yl)-4-azaphthalide, 7-(4-diethylamino-2-hexyloxy-phenyl)-7-(1-ethyl-2-methyl-1H-indol-3-yl)-7H-furo(3,4-b)pyridin-5-one, 3,3-bis(p-diethylaminophenyl)-6-dimethylaminophthalide, 3,3-bis(p-dimethylaminophenyl)-6-dimethylaminophthalide, 3,3'-bis(p-dimethylaminophenyl)phthalide, 4,4'-bis(diethylamino)benzophenone, 3-cyclohexylamino-6-chlorofluoran, spiro[isobenzofuran-1(3H), 9'-[9H]xanthen]-3-one, 6'(propylmethylamino)-3'-methyl-2'-phenylamino, 3-butylamino-6-methyl-7-anilinofluoran, spiro[isobenzofuran-1(3H), 9'-[9H]xanthen]-3-one, 6'-(isobutylethylamino)-3'-methyl-2'-phenylamino, spiro[isobenzofuran-1(3H), 9'-[9H]xanthen]-3-one, 6'-(cyclohexylmethylamino)-3'-methyl-2'-phenylamino, 3-diethylamino-6-methyl-7-xylidinofluoran, 3 -diethylamino-7-chloro-anilinofluoran, 2'-(2-chloroanilino)-6'-dibutylaminospiro(phthalide-3,9'-xanthene), 3,3-bis(1-ethyl-2-methyl-indol-3-yl)phthalide, 3-(4-ethylphenol)amino-2-ethoxyphenyl)-3-(1-ethyl-2-methylindol-3-yl)-4-azaphthalide, 3,6-bisdiphenylaminofluoran, 5'-chloro-6'-methyl-3,6-bisdiphenylaminofluoran, 2-(dibutylamino)-8-(diethylamino)-4-methylspiro[5H-(1)benzopyrano(2,3-d)pyrimidine-5,1'-(3'H)-isobenzofuran]-3'-one, 3,3-bis(4-diethylamino-2-ethoxyphenyl)-4-azaphthalide, and the like.

In the present invention, the developed color can be optionally adjusted by using any one kind of electron-donating color-developing organic compounds or in combination of any two kinds or more, among the three components: the electron-donating color-developing organic compound, the electron-accepting compound, and the color development regulator having hydrophilicity.

(3) Electron-accepting compound

An electron-accepting compound (color developer substance) is a component for color developer by a color-developing reaction with an electron-donating color-developing organic compound such as leuco dye.

Useful electron-accepting compounds (color developer substances) include traditionally those known as color developers for pressure sensitive copying paper, color developers for thermal recording paper, and color developers for thermochromic compositions, other organic color developer substances, and other acid color developer substances; specific examples include oleophilic substances such as bisphenol derivatives and benzotriazole derivatives.

More specific examples of electron-accepting compounds (color developer substances) include, but are not limited to, 5-butylbenzotriazole, bisbenzotriazole-5-methane, 1,1'-biphenyl-4,4'-diol, o-methylenebisphenol, p-methylenebisphenol, 2,2'-bisphenol, 4,4'-isopropylidenediphenol, 2,2'-bis(4-hydroxyphenyl)hexafluoropropane, bis(4-hydroxyphenyl)sulphate, 4,4'-(2-ethylhexylidene)bisphenol, 4,4'-hexylidenebisphenol, 4,4'-octylidenebisphenol, 4,4'-(4-methyloctylidene)bisphenol, 4,4'-decylidenebisphenol, 4,4'-(1,3-dimethylbutylidene)bisphenol, 4,4'-(1,5-dimethylhexylidene)bisphenol, 4,4'-(1-methyl-4-methylheptylidene)bisphenol, 4,4'-(2-ethyl-hexylidene)bisphenol, 4,4'-(1-ethyl-octylidene)bisphenol, 4,4'-ethylidenebisphenol, 2,2'-methylenebis(4-methylphenol), 4,4'-(1-methyl-ethylidene)bis(2-methylphenol), 4,4'-cyclohexylidenebisphenol, 4,4'-(1-phenylethylidene)bisphenol, 4,4'-(1-methyl-propylidene)bisphenol, 4,4'-(2-methyl-propylidene)bisphenol, 4,4'-cyclopentylidenebisphenol, 4,4'-(phenylmethylene)bisphenol, bis(3-allyl-4-hydroxyphenyl)sulfone, 4-hydroxy-4-isopropoxydiphenylsulfone, 4,4'-dihydroxydiphenylsulfone, 2,4'-dihydroxydiphenylsulfone, para-oxybenzoic acid, gallic acid, and hydroquinone.

In the present invention, electron-accepting compounds (color developer substances) constituting the three components together with the electron-donating color-developing organic compound and the color development regulator having hydrophilicity can be used alone or in combination of two kinds or more.

(4) Color development regulator

(4-1) The color development regulator has an effect of hampering color development by the electron-donating color-developing organic compound and the electron-accepting compound (color development due to electron donation and acceptance therebetween) (desensitization) in the three components. On the other hand, because this color development regulator is hydrophilic, the effect of the color development regulator is suppressed by water or a water-containing liquid, allowing color development (in other words, color change) by electron donation and acceptance between the electron-donating color-developing organic compound and the electron-accepting compound.

(4-2) The fact that "the effect of the color development regulator to hamper the color development by electron donation and acceptance between the electron-donating color-developing organic compound and the electron-accepting compound is suppressed by water or a water-containing liquid" means that the effect of the color development regulator to hamper the color development by electron donation and acceptance between the electron-donating color-developing organic compound and the electron-accepting compound is suppressed as the three components (particularly, the color development regulator) come into contact with water or a water-containing liquid, or as the composition gets wet with water or a water-containing liquid. In a temperature where the hydrophilicity of the color development regulator changes with temperature and is low, there can be cases where the effect of the color development regulator is not suppressed or suppressed to low degrees, even when the three components (particularly, the color development regulator) come into contact with water or a water-containing liquid, or when the composition gets wet with water or a water-containing liquid. The effect of the color development regulator is considered to be difficult to suppress merely by humidity changes in the surrounding air and the like.

(4-3) A color development regulator is a component related to the basis of the color development function of water or a water-containing liquid in the present invention, and is required to be hydrophilic.

To ensure a color change (visibility in particular) in the color-changing material or the color-changeable colorant of the present invention in the presence of water or a water-containing liquid, the color development regulator preferably has a solubility parameter ($\delta$) of 10 or more, and the difference in solubility parameter ($\delta$) between the electron-accepting compound and the color development regulator is preferably between plus and minus 3. The difference in solubility parameter ($\delta$) between the electron-accepting compound and the color development regulator is more preferably between plus and minus 2, and still more preferably between plus and minus 1.5.

By allowing the electron-accepting compound (color developer substance) and the color development regulator to have mutually as close solubility parameter ($\delta$) as possible, it is possible to enhance as much as possible the effect of the color development regulator to hamper the color development by electron donation and acceptance between the electron-donating color-developing organic compound and electron-accepting compound (desensitization) in the present invention. This makes it possible to prevent as much as possible the color development by electron donation and acceptance between the electron-donating color-developing organic compound and the electron-accepting compound in a state of the color-changing material or the color-changeable colorant of the present invention prior to color change in the presence of water or a water-containing liquid, and to make distinct the difference from the color development by electron donation and acceptance between the electron-donating color-developing organic compound and the electron-accepting compound in the presence of water or a water-containing liquid (color change, particularly its visibility).

The solubility parameters (SP values) ($\delta$) [unit of measurement $(cal/cm^3)^{1/2}$] of the color development regulator and the organic solvent in the present invention can be calculated by the Fedors method using the equation [1] below:

$$\delta = (\Sigma\Delta ei/\Sigma\Delta vi)^{1/2} .... [1]$$

[In the equation [1] above, "$\Delta ei$" represents the energy of vaporization (cal/mol) of an atom or atomic group, and "$\Delta vi$" represents the molar volume ($cm^3$/mol). For the various parameters of atoms and atomic groups required for the calculation, refer to R. F. Fedors, Polym. Eng. Sci. 14, 147 (1974).]

For the oleophilic fixing agent in the present invention, the solubility parameter can be measured as follows using the Hansen sphere method.

(i) A target sample is mixed with a solvent having a known solubility parameter, and whether or not the target sample has been dissolved is determined. (For a sample that is not dissolved, such as a vulcanized rubber, a solubility parameter is calculated based on swelling, softening, and crack generation.)
(ii) The results of solubility test are plotted in a three-dimensional space of the solubility parameters ($\delta_{D \text{ (dispersion term)}}$, $\delta_{P \text{ (polarity term)}}$, $\delta_{H \text{ (hydrogen bond term)}}$).
(iii) A sphere containing the dissolved coordinate and not containing the coordinate of the undissolved solvent (Hansen sphere) is determined.

The center coordinate of the sphere indicates the solubility parameter of the sample, and the radius indicates the range of the solvent that dissolves the sample.

(4-4) In addition, for ensuring the color change (particularly its visibility) of the color-changing material or the color-changeable colorant of the present invention in the presence of water or a water-containing liquid, it is preferable that the solubility in water (g/100 g $H_2O$) of the color development regulator used be not less than 100 at least at the use environment temperature of the color-changing material or the color-changeable colorant of the present invention (a temperature at which at least water or a water-containing liquid can be present, e.g., normal temperature, 1-40 degrees C, 5-30 degrees C, 40-80 degrees C, 60-90 degrees C, 0-100 degrees C). The solubility is more preferably not less than 200, and still more preferably infinite. The use environment is, for example, an environment in which color changes of the color-changing material or the color-changeable colorant of the present invention in the presence of water or a water-containing liquid are required.

By using a color development regulator whose solubility in water is as high as possible, the effect of the color development regulator to hamper the color development by electron donation and acceptance between the electron-donating color-developing organic compound and the electron-accepting compound (desensitization) is suppressed as much as possible by water or a water-containing liquid, to cause color development by electron donation and acceptance between the electron-donating color-developing organic compound and the electron-accepting compound as effectively as possible (e.g., color development at high densities); this produces a more distinct difference from the state prior to color change by water or a water-containing liquid (color change, particularly its visibility).

Regarding the mechanism of color changes by contact of the three components (particularly, the color development regulator) with water or a water-containing liquid or by wetting of the composition with water or a water-containing liquid in the present invention, the color change can be considered to occur as follows: When the water solubility (g/100 g $H_2O$) of the color development regulator in the three components is sufficiently high, e.g., not less than 100, the color development regulator comes into contact with water and becomes a mixed solvent with water, which has a high solubility parameter ($\delta$ = 23.4); as a result, a difference between the solubility parameter ($\delta$) of the mixed solvent and the solubility parameter ($\delta$) in the bound state of the electron-accepting compound and the electron-donating color-developing organic compound widens, and the desensitization of the color development regulator as the mixed solvent is no longer available. However, the present invention is not limited to this explanation of the mechanism.

(4-5) Examples of color development regulator include, but are not limited to, 1-methoxy-2-propanol, 1-ethoxy-2-propanol, ethylene glycol, propylene glycol, diethylene glycol, diethylene glycol monomethyl ether, dipropylene glycol, dipropylene glycol monomethyl ether, triethylene glycol, tripropylene glycol, glycerol, tetraethylene glycol, polyethylene glycol 200, polyethylene glycol 300, polyethylene glycol 400, polyethylene glycol 600, polyethylene glycol 1000, polyethylene glycol 2000, polyethylene glycol 4000, polyethylene glycol 6000, polypropylene glycol 20000, polypropylene glycol 400, polypropylene glycol 750, 1,3-propanediol, 1,3-butanediol, 1,5-pentanediol, 1,6-hexanediol, and 1,3-cyclohexanediol.

In the present invention, color development regulators constituting the three components together with the electron-donating color-developing organic compound and the electron-accepting compound can be used alone or in combination of two kinds or more.

(4-6) In addition, by using a color development regulator having a vapor pressure at 20 degrees C of not more than 0.01 mmHg, volatilization in the daily environment is sufficiently prevented to allow the color-changing material or the color-changeable colorant of the present invention to stably retain the function to change its color in the presence of water or a water-containing liquid for a long period.

The color development regulator alone may be liquid, solid, plastic, or fluid at the use environmental temperature of the color-changing material or the color-changeable colorant of the present invention.

(5) Color-changeable colorant

In the color-changeable colorant of the present invention, the color-changeable composition is retained or carried by a specified microbody and can change its color in the presence of water or a water-containing liquid.

(5-1) The specified microbody in the color-changeable colorant of the present invention is for retaining or carrying the color-changeable composition to constitute a colorant that can change its color in the presence of water or a water-containing liquid.

The specified microbody is such that water or a water-containing liquid can come into contact with the retained or carried color-changeable composition.

Examples of such specified microbodies include those in which outside water or a water-containing liquid can come into contact with the color-changeable composition retained or carried by a large number of pores and the like directly or via pores, like porous substances such as powdery porous substances as microbodies, and those in which outside water or a water-containing liquid can come into contact with the internally retained or carried color-changeable composition via a large number of pores, like porous microcapsules. However, these examples are not to be construed as limiting the specified microbody that can be used in the present invention.

Hence, it is possible to allow a color-changeable colorant, which comprises the color-changeable composition comprising the at least three components described above carried by the specified microbody, to change its color stably and as quickly as possible in the presence of water or a water-containing liquid, while the content ratio of the color-changeable composition is maintained in individual specified microbodies. To ensure that the color change in the retained or carried color-changeable composition occurs as clearly as possible, particularly with distinct visibility, it is preferable that the specified microbody be colorless, white-colored, or light-colored and transparent; however, these conditions are not to be construed as limiting.

(5-2) At least a portion of the specified microbody that retains or carries the color-changeable composition desirably exhibits basicity or neutrality (the pH range is preferably 6.0 to 12.0, more preferably 6.5 to 11.0, and still more preferably 7.0 to 9.0) for ensuring the color change (particularly its visibility) of the color-changeable colorant of the present invention in the presence of water or a water-containing liquid. (However, it is possible or preferable that the portion exhibiting basicity or neutrality includes or is the entire other portion of the specified microbody.).

When the color-changeable composition is particularly retained or carried by a strongly acidic specified microbody (porous substance or the like), color change tends to be small or does not occur when the color-changeable composition comes into contact with water or a water-containing liquid. The reason for this is presumed to be that the desensitization that hampers color development by the electron-donating color-developing organic compound and the electron-accepting compound due to the color development regulator having hydrophilicity is not sufficiently exhibited in a state of not coming into contact with water or a water-containing liquid, and the difference from the case of coming into contact with water or a water-containing liquid is small or not generated. Therefore, it is not preferable that the color-changeable colorant of the present invention and the color-changeable composition contain a water-soluble acidic substance.

(5-3) In the color-changeable colorant of the present invention, the color-changeable composition is preferably retained or carried in the form of solid by the specified microbody. However, this condition is not to be construed as limiting; for example, the color-changeable composition may be retained or carried by the specified microbody in the form of a viscous substance or in other plastic or fluid form (e.g., adsorbed or adhered to, or impregnated in, a large number of pores of powdery porous substance, or enclosed in porous microcapsules).

The color-changeable colorant of the present invention may be obtained by applying a color-changeable composition comprising at least an electron-donating color-developing organic compound, an electron-accepting compound, and a color development regulator, which is preferably in the form of a liquid color-changeable composition or in the form of another plastic or fluid color-changeable composition prepared by, for example, hot-melt dissolution, hot-melt mixing, or thermal dissolution, to the specified microbody (e.g., the color-changeable composition is adhered or adsorbed to, or impregnated or enclosed in the specified microbody). In the color-changeable colorant, the color-changeable composition is retained or carried preferably as a solid, or retained or carried (e.g., adhered, adsorbed, impregnated, or enclosed) in the form of, for example, a viscous substance or other plastic or fluid forms, by the specified microbody, in the use environment (e.g., use environmental temperature).

(5-4) Preferred examples of the specified microbody in the color-changeable colorant of the present invention include porous substances such as powdery porous substances.

(a) To ensure that the color-changeable composition comprising at least an electron-donating color-developing organic compound, an electron-accepting compound, and a color development regulator is stably carried by a porous substance, and the color development by electron donation and acceptance between the electron-donating color-developing organic compound and the electron-accepting compound in the presence of water or a water-containing liquid is effectively visible (e.g., visible at high densities), it is preferable that the pore volume or pore diameter or both of the porous substance as the specified microbody be as follows:

The pore volume of the porous substance is preferably not less than 0.3 cm$^3$/g. The pore volume is more preferably not less than 0.4 cm$^3$/g, and still more preferably not less than 0.5 cm$^3$/g.

The pore diameter of the porous substance is preferably not less than 20 angstroms. The pore diameter is more preferably not less than 50 angstroms, and still more preferably not less than 100 angstroms.

(b) Examples of the porous substance in the color-changeable colorant of the present invention include, but are not limited to, silicon dioxide, silica gel, a silicon dioxide-alumina fired product (or a silicon dioxide-alumina composite or mixture), aluminum silicate, zeolite, alumina, diatomaceous earth, talc, bentonites, clays, calcium carbonate, magnesium carbonate, acid clay, titanium oxide, an ion exchange resin, and the like. The porous substance exhibiting acidity is preferably used in the color-changeable colorant of the present invention after being subjected to neutralization treatment.

The porous substances in the color-changeable colorant of the present invention may be used alone or in combination of two or more kinds. The porous substances preferably exhibit basicity or neutrality.

(c) When the specified microbody is a porous substance, the color-changeable colorant of the present invention may be obtained by, for example, applying a color-changeable composition comprising at least an electron-donating color-developing organic compound, an electron-accepting compound, and a color development regulator, which is preferably in the form of a liquid composition or in the form of another plastic or fluid composition prepared by, for example, hot-melt dissolution, hot-melt mixing, or thermal dissolution, to the porous substance as the specified microbody, in which the composition is adhered or adsorbed to, or impregnated in the porous substance. In the colorant thereafter obtained, the color-changeable composition is retained or carried (e.g., adhered, adsorbed or impregnated) preferably as a solid, or retained or carried (e.g., adhered, adsorbed or impregnated) in the form of, for example, a viscous substance or other plastic or fluid forms, by the porous substance, in the use environment.

The operation of allowing the color-changeable composition comprising at least three components described above to be retained or carried by a porous substance as the specified microbody by adherence, adsorption, impregnation, and the like can be performed by, for example, making at least three components liquid (or another plastic or fluid form) by hot-melt dissolution, hot-melt mixing, or thermal dissolution, and adding them to particles of a porous substance as the specified microbody such as continuously stirred powdery porous substance.

Specifically, the procedure can be performed as follows:

For example, in a heat-resistant container, 1 part of an electron-donating color-developing organic compound, and, 3 to 5 parts of an electron-accepting compound and 5 to 20 parts of a color development regulator with a difference in solubility parameter ($\delta$) between plus and minus 2, are mixed in a thermally molten state at 100 to 160 degrees C to prepare a color-changeable composition. A powdery (preferably neutral or alkaline) porous substance having a pore volume of not less than 0.3 cm$^3$/g and a pore diameter of not less than 20 angstroms is continuously stirred in another heat-resistant container, and the thermally molten color-changeable composition is gradually added into the container, whereby the color-changeable composition is carried by particles of the powdery porous substance by adsorption (or impregnation and the like).

Alternatively, for example, the same porous substance as that described above may be continuously stirred with heating at 100 to 160 degrees C in a heat-resistant container, and the color-changeable composition in a hot-melt state may be gradually added to allow the color-changeable composition to be carried by the color-changeable composition to particles of the powdery porous substance by adsorption (or impregnation and the like).

When using this operation to allow the color-changeable composition comprising the at least three components described above to be retained or carried by particles of a porous substance as the specified microbody such as powdery porous substance, whether the maximum possible amount retained or carried (saturated retention or carriage) is exceeded or not can be determined on the basis of whether the color-changeable composition and particles of a porous substance is in the form of particles of a microbody such as a powder or not (e.g., in a mixture of particles of a microbody and a liquid substance or other plastic or fluid substance, or in a semi-fluid state), after adding the at least three components described above in liquid (or other plastic or fluid form) to a continuously stirred particles of a porous substance as the specified microbody. Even if the amount of the color-changeable composition does not reach the saturated retention or carriage, the color-changeable composition and particles of a porous substance can also fail to come into the state of particles of a microbody such as a powder in case of insufficient stirring or other operations for allowing the color-changeable composition to be retained or carried by particles of a porous substance as the specified microbody.

(d) The maximum amount of the color-changeable composition that can be retained or carried by a porous substance as the specified microbody such as a powdery porous substance as the specified microbody (saturated retention or carriage) varies depending mainly on the pore volume and pore diameter of the porous substance, generally falling in the range of 0.5 to 1.5 parts of the color-changeable composition relative to 1 part of the porous substance.

To ensure as distinct a difference as possible in the color of the color-changeable colorant of the present invention between before and after the color change in the presence of water or a water-containing liquid (particularly its visibility), it is preferable that a color-changeable composition comprising the at least three components described above at the saturated retention or carriage (or a similar amount, e.g., 50% by mass of saturated retention or carriage or more, preferably 70% by mass or more, more preferably 80% by mass or more, still more preferably 90% by mass or more, and yet still more preferably 95% by mass or more) be retained or carried by a porous substance such as a powdery porous substance as the specified microbody.

In the case of a mixture of particles of a porous substance as the specified microbody retaining or carrying the color-changeable composition at the saturated retention or carriage (or in an amount smaller than the saturated retention or carriage if the stirring and other operations are insufficient to allow the color-changeable composition to be retained or carried by particles of a porous substance as the specified microbody) and the color-changeable composition not retained or carried by a porous substance as the specified microbody, there are concerns that the color-changeable composition bleeds over time, and that the effect of the color development regulator in the color-changeable composition to hamper the color development by the electron-donating color-developing organic compound and the electron-accepting compound is made insufficient by a trace amount of water (liquid) produced due to humidity changes in the air to produce a slightly color-developing state.

(6) Fixing material

(6-1) The fixing material in the color-changing material of the present invention is mainly used for fixing, contains an oleophilic fixing agent, and can be, for example, in a liquid or solid state at normal temperature or in a use temperature range. The fixing material may contain other substances such as various additives, for example.

Examples of the fixing material in the color-changing material of the present invention include vehicles (fixing materials) in a hot melt printing ink (color-changing material), vehicles (fixing materials) in an organic solvent evaporation drying printing ink (color-changing material), vehicles (fixing materials) in a thermosetting dry offset ink (color-changing material), components (fixing materials) mainly including a binder resin and the like in an electrostatic latent image developing toner (color-changing material), WAXs (fixing materials) in a crayon (color-changing material) and an oil pastille (color-changing material), and vehicles (fixing materials) in a liquid paint (color-changing material).

(6-2) Oleophilic fixing agent

(a) The oleophilic fixing agent contained in the fixing material in the color-changing material of the present invention is a main component for fixing to a required object (for example, a sheet-shaped article such as paper, a synthetic resin film [for example, a polyester film, a polyethylene film, or a polypropylene film], synthetic paper, a nonwoven fabric, a woven fabric, or a knitted fabric, a textile product such as clothing made of a woven fabric or a knitted fabric, a natural leather, a synthetic leather, or a product made of these, a plate-shaped article made of wood, a synthetic resin, metal, or other materials, or a product having another shape), and it is preferable to use one having a solubility parameter ($\delta$) of 12 or less. The oleophilic fixing agent has a solubility parameter ($\delta$) of more preferably 11 or less, and still more preferably 10 or less.

Both the softening point of the vehicle (fixing material) and the softening point of the oleophilic fixing agent contained in the vehicle in the hot melt printing ink as the color-changing material of the present invention are preferably 50 to 140 degrees C. Both the softening point of the fixing material and the softening point of the oleophilic fixing agent contained in the fixing material in the color-changing material other than the hot melt printing ink are not limited thereto.

Examples of the oleophilic fixing agent include polymer substances such as synthetic resins and synthetic rubbers, natural resins, and WAXes containing a polymer WAX. More specific examples thereof include ethylene-vinyl acetate resins, polyethylene resins, styrene-butadiene copolymer resins, styrene resins, polyester resins, acrylic rubbers, acrylic resins, methacrylic resins, urethane resins, petroleum resins, rosin acid ester resins, alkyd melamine resins, alkylated melamine resins such as butylated melamine, amide resins, microstalline WAX, paraffin WAX, polyethylene WAX, polypropylene WAX, carnauba WAX, crystalline WAX, and the like. These may be used alone or in combination of two or more kinds. However, the oleophilic fixing agent is not limited thereto.

(b) In the color-changing material of the present invention, it is preferable that 80% by weight or more of an oleophilic fixing agent having a solubility parameter ($\delta$) of 12 or less is contained in all fixing agents thereof.

When the content of the oleophilic fixing agent having a solubility parameter ($\delta$) of 12 or less is less than 80% by weight in all fixing agents, that is, for example, when a hydrophilic fixing agent having a solubility parameter ($\delta$) of 12 or more is contained in an amount exceeding 20% by weight, the color-changing material may have problems such as coloring as a residual color before contact with water or a liquid containing water, and generation of a strong residual color over time.

(c) However, in the color-changing material of the present invention, when the hydrophilic fixing agent having a solubility parameter ($\delta$) of 12 or more (fixing agent that also acts as a hydrophilizing agent) is used in combination in a range in which 20% by weight or less of the hydrophilic fixing agent is contained in all fixing agents, an effect of improving the speed of color change (indicator function) of the color-changing material by water or a liquid containing water can be generated. The content of the hydrophilic fixing agent having a solubility parameter ($\delta$) of 12 or more in all fixing agents is preferably 10% by weight or less, and more preferably 5% by weight or less in order to improve the color change speed while avoiding an adverse effect that causes residual color.

Examples of the hydrophilic fixing agent having a solubility parameter ($\delta$) of 12 or more to be used in this manner include those having a solubility parameter ($\delta$) of 12 or more by introducing a required amount of a functional group (hydroxyl group, carboxyl group, sulfonic acid group, amino group, or the like) as a hydrophilic group into a polymer skeleton of a synthetic resin or polymer WAXes to impart hydrophilicity thereto, or polyvinyl alcohol resins, polybutyral resins, ethyl cellulose, hydroxypropyl cellulose, polyvinylpyrrolidone, epoxy resins, vinylidene chloride resins, cellulose acetate, vinyl acetate resins, phenol resins, polyamide resins and the like, and it is preferable to select one having excellent compatibility with the oleophilic fixing agent in the color-changing material of the present invention.

**(7) Color-changing material**

The color-changing material of the present invention contains the three components and the fixing material, or contains the color-changeable colorant and the fixing material, can change its color in the presence of water or a water-containing liquid, and can function as an indicator for water or a water-containing liquid. The color-changing material containing the three components and the fixing material may contain, for example, 0.1 to 2% by weight of the electron-donating color-developing organic compound, 1 to 10% by weight of the electron-accepting compound, 5 to 30% by weight of the color development regulator, and 80% by weight or less of the fixing material, and may contain various additives, volatile organic solvents, and the like as the balance as necessary. In addition, the color-changing material containing the color-changeable colorant and the fixing material may contain, for example, 0.1 to 2% by weight of the electron-donating color-developing organic compound, 1 to 10% by weight of the electron-accepting compound, 1 to 30% by weight of the color development regulator, 5 to 30% by weight of the specified microbody, and 80% by weight or less of the fixing material, and may contain various additives, volatile organic solvents, and the like as the balance as necessary.

In addition to the three components or the color-changeable colorant and the fixing material (or in the fixing material), the color-changing material of the present invention may contain, for example, 20% by weight or less (preferably 10% by weight or less, and more preferably 5% by weight or less) as a content in all fixing agents of the hydrophilic fixing agent as described above; a hydrophilizing agent (for example, urea, a water-soluble glue, a nonionic surfactant, an anionic surfactant, a cationic surfactant, a hydrophilic oil agent, and the like); a non-color-changeable colorant (for example, one or two or more of non-color-changeable organic pigments, dyes, inorganic pigments, and the like); various additives such as an antioxidant, an ultraviolet absorber, a defoamer, a thickener, an extender pigment, and a plasticizer.

Examples of the color-changing material include, but are not limited to, hot melt printing inks, organic solvent evaporation drying printing inks, thermosetting dry offset inks, inkjet inks (including hot melt inkjet inks), inks for writing instrument, crayons, oil pastilles, electrostatic latent image developing toners, (liquid) paints, powder coatings, and plastic molding materials.

The color-changing material of the present invention containing a non-color-changeable colorant assumes a color from the non-color-changeable colorant, whether the color development by electron donation and acceptance between the electron-donating color-developing organic compound and the electron-accepting compound is hampered by the effect of the color development regulator, or a color is developed by electron donation and acceptance between the electron-donating color-developing organic compound and the electron-accepting compound, while the effect is suppressed by water or a water-containing liquid. In this respect, it is also possible to obtain a color-changing material having more excellent designability and visibility.

The non-color-changeable pigment may be an inorganic pigment or an organic pigment; examples of useful pigments include, but are not limited to, carbon black pigments and iron oxide pigments as black pigments; azo pigments, quinacridone pigments, diketopyrrolopyrrole pigments, cromophtal pigments, and anthraquinones pigments as red pigments; azo pigments, imidazolone pigments, and titanium pigments as yellow pigments; indanthrene pigments and azo pigments as orange pigments; phthalocyanine pigments as blue or green pigments; and dioxazine pigments and quinacridone pigments as purple pigments.

Examples of the useful non-color-changeable dyes include, but are not limited to, dispersion dyes, acid dyes, and cationic dyes.

The non-color-changeable pigment or dye is preferably used in a state previously dispersed or dissolved in the color development regulator as a component of the composition.

The amount used of the non-color-changeable pigment or dye is preferably in a range that does not inhibit the visibility of the color change of the color-changing material of the present invention in the presence of water or a water-containing liquid. Specifically, it is preferable that the non-color-changeable pigment or dye be blended generally in the range of 0.0001 to 1 part relative to 100 parts of the total amount of the three components.

Hereinafter, several examples of the color-changing material will be described.

**(7-1) Hot melt printing ink**

(a) The hot melt printing ink as the color-changing material of the present invention can be obtained by mixing components mainly including an oleophilic fixing agent, three components: an electron-donating color-developing organic compound, an electron-accepting compound, and a color development regulator that hampers the color development by the electron-donating color-developing organic compound and the electron-accepting compound and has hydrophilicity (alternatively, a color-changeable composition which includes these three components and can change its color by water or a water-containing liquid), or by mixing components mainly including an oleophilic fixing agent and the color-changeable colorant.

The components mainly including oleophilic fixing agent and the three components (or the color-changeable composition) or the color-changeable colorant can be mixed by, for example, hot-melt mixing or by using hot-melt mixing and a dispersion treatment using a dispersing machine such as a heating three-roll mill in combination.

(b) The hot melt printing ink of the present invention may contain the oleophilic fixing agent, and as components other than the three components (or the color-changeable composition) or the color-changeable colorant, for example, various additives such as the hydrophilic fixing agent, a hydrophilizing agent, a non-color-changeable colorant, an antioxidant, an ultraviolet absorber, a defoamer, a thickener, an extender pigment, and a plasticizer as described above.

(c) The hot melt printing ink of the present invention is preferably one in which physical properties such as viscosity (viscosity coefficient) and drying speed are appropriately adjusted according to application equipment such as a printing machine and a coating machine to be applied to a required object. Such adjustment of physical properties can be performed by, in addition to the selection of the main component, selection of components other than the main component such as a thickener, a viscosity modifier, and a defoamer component, increase or decrease in the blending amount, and the like.

(d) Examples of types of the hot melt printing ink of the present invention include, but are not limited to, a hot melt screen printing ink, a hot melt gravure printing ink, a hot melt tampo printing ink, a hot melt knife coater ink, a hot melt roll coater ink, a T-die ink, and the like.

The range of the viscosity coefficient in the temperature zone during heating to be used for printing can be adjusted to, for example, approximately 5,000 to 50,000 mPa·s (millipascal-seconds) in the case of the hot melt screen printing ink, and can be adjusted to be approximately 100 to 500 mPa·s in the case of the hot melt gravure printing ink. For the other hot melt printing inks of the present invention, the range of the viscosity coefficient in the temperature zone during heating to be used for printing can be adjusted according to application equipment such as a printing machine and a coating machine.

(e) The softening point of the hot melt printing ink of the present invention is preferably approximately 50 degrees C to 140 degrees C in consideration of appropriate temperature, viscosity, ink stability, and the like in the hot melt printing, and as the oleophilic fixing agent in the hot melt printing ink of the present invention, one having a softening point of approximately 50 degrees C to 140 degrees C is preferably used.

(f) The hot melt printing ink of the present invention can be hot melted in application equipment such as a printing machine or a coating machine, and used for printing or the like. Examples of the hot melting temperature may include a range of approximately 50 degrees C to 140 degrees C, and more preferably 80 degrees C to 120 degrees C.

Examples of equipment for applying the hot melt printing ink to an object include, but are not limited to,

a hot melt screen printing machine that prints using a screen plate that can be heated by electric heating; a hot melt gravure printing machine that prints by heating an ink pan (ink reservoir container) and a gravure roll plate on the machine; a hot melt tampo printing machine that prints by heating a metal plate and a silicon pad on the machine; a hot melt knife (comma) coater coating machine and a hot melt roll coater coating machine for heating and coating a coating roll on the machine and ink; a T-die coating machine that heats an ink reservoir and ink and applies the ink while dropping the ink in a curtain shape from a certain gap; and the like.

By applying the hot melt printing ink to an object (substrate) using such equipment, a printed matter, a coated product, or the like in which a color-changing material that can change its color in the presence of water or a water-containing liquid is fixed (that is, having an indicator function) can be obtained.

(7-2) Organic solvent evaporation drying printing ink

(a) The organic solvent evaporation drying ink as the color-changing material of the present invention can be obtained by mixing components mainly including a vehicle (fixing material) in which an oleophilic fixing agent is dissolved or dissolved and dispersed (for example, dissolved and partially dispersed) in a volatile organic solvent such as a volatile oleophilic organic solvent and three components: an electron-donating color-developing organic compound, an electron-accepting compound, and a color development regulator that hampers the color development by the electron-donating color-developing organic compound and the electron-accepting compound and has hydrophilicity (alternatively, a color-changeable composition which includes these three components and can change its color by water or a water-containing liquid), or by mixing components mainly including the vehicle (fixing material) and the color-changeable colorant.

The components mainly including the vehicle and the three components (or the color-changeable composition) or the color-changeable colorant can be mixed by, for example, stirring and mixing using a dispersing mixer, a homomixer, or the like, a dispersion treatment using a DYNO-MILL, an attritor mill, a three roll, a sand mill, a ball mill, or the like, or the like.

(b) The volatile organic solvent such as the volatile oleophilic organic solvent in the organic solvent evaporation drying ink of the present invention preferably has a solubility parameter ($\delta$) of 12 or less. The volatile organic solvent such as the volatile oleophilic organic solvent has a solubility parameter ($\delta$) of more preferably 11 or less, and still more preferably 10 or less.

When the organic solvent evaporation drying printing ink of the present invention is applied to an object by printing, coating, or the like, the volatile organic solvent such as the volatile oleophilic organic solvent is preferably an organic solvent having low solubility with water, preferably a non-water-soluble organic solvent, in order to ensure stability over time that the color-changing material fixed to the object that changes color due to contact with water or a liquid containing water or to prevent coloring as a residual color before contact with water or a liquid containing water.

Further, the volatile organic solvent such as the volatile oleophilic organic solvent has a boiling point of preferably 200 degrees C or less, more preferably 180 degrees C or less, and still more preferably 150 degrees C or less. When the organic solvent evaporation drying printing ink of the present invention is applied to an object by printing or the like, remaining of the organic solvent in the color-changing material fixed to the object may inhibit the color-changing material from changing color by water or a water-containing liquid, which is not preferable. However, the boiling point of the volatile organic solvent such as the volatile oleophilic organic solvent may be high to some extent, if the organic solvent is reliably prevented from remaining due to forced operation of a heating and drying apparatus or the like after the organic solvent evaporation drying printing ink of the present invention is applied to an object by printing or the like.

As the oleophilic fixing agent, one suitable for the application of the organic solvent evaporation drying ink can be selected, and as the volatile organic solvent such as the volatile oleophilic organic solvent, one suitable for dissolving or dissolving and dispersing the oleophilic fixing agent can be selected. In this case, the vehicle (fixing material) preferably contains 80% by weight or more of the volatile organic solvent having a boiling point of 200 degrees C or less and a solubility parameter ($\delta$) of 12 or less in all volatile organic solvents contained. The content is more preferably 90% by weight or more, and still more preferably 95% by weight or more.

Examples of the volatile organic solvent such as a volatile oleophilic organic solvent having a solubility parameter ($\delta$) of 12 or less and a boiling point of 200 degrees C or less include aliphatic hydrocarbons, aromatic hydrocarbons, esters, ketones, ethers, alcohols, and the like, and specific examples thereof include n-pentane, n-heptane, n-hexane, cyclohexane, methylcyclohexane, ethylcyclohexane, butyl acetate, isobutyl acetate, isopropyl acetate, xylene, toluene, benzene, methyl ethyl ketone, ethyl acetate, cyclohexanone, cellosolve acetate, propylene glycol acetate, methyl isobutyl ketone, isophorone, ethylene glycol monomethyl ether, ethylene glycol monoethyl ether, propylene glycol monomethyl ether, propylene glycol monoethyl ether, propyl alcohol, butyl alcohol, SOLFIT [trademark] (3-methoxy-3-methyl-1-butanol), and the like. These may be used alone or in combination of two or more kinds. However, the oleophilic fixing agent is not limited thereto.

(c) In the organic solvent evaporation drying ink of the present invention, when a volatile hydrophilic organic solvent having a solubility parameter ($\delta$) of 12 or more is contained in an amount exceeding 20% by weight in all volatile organic solvents, the organic solvent evaporation drying ink may have problems such as coloring as a residual color before contact with water or a liquid containing water, generation of a strong residual color over time, and occurrence of a change in hue or the like in color change due to contact with water or a liquid containing water, which is not preferable.

However, when it is necessary to use a volatile oleophilic organic solvent and a volatile hydrophilic organic solvent in combination in order to prevent adverse effects of the organic solvent in the organic solvent resistance and the like of the object (substrate) to which the organic solvent evaporation drying ink of the present invention is applied by printing and the like, the volatile hydrophilic organic solvent can be contained preferably within 20% by weight (more preferably within 10% by weight, and further preferably within 5% by weight) in all organic solvents.

Furthermore, in the organic solvent evaporation drying printing ink of the present invention, it is desirable that all organic solvents have volatility in order to prevent the organic solvent from remaining in the color-changing material fixed to the object or the like, and to prevent problems such as coloring as a residual color before contact with water or a liquid containing water, generation of a strong residual color over time, occurrence of a change in hue or the like in color change due to contact with water or a liquid containing water, or occurrence of fading after color change (color development). In this regard, it is preferable that the volatile organic solvent has a boiling point of 200 degrees C or less, and after the organic solvent evaporation drying printing ink of the present invention is applied to an object by printing or the like, remaining of the volatile organic solvent such as the volatile oleophilic organic solvent is reliably prevented by forced operation of a heating and drying apparatus or the like.

(d) The organic solvent evaporation drying ink of the present invention may contain the volatile organic solvent such as the volatile oleophilic organic solvent and the oleophilic fixing agent in the vehicle, and as components other than the three components (or the color-changeable composition) or the color-changeable colorant, for example, various additives such as the hydrophilic fixing agent, a hydrophilizing agent, a volatile hydrophilic organic solvent, or a non-color-changeable colorant, an antioxidant, an ultraviolet absorber, a defoamer, a thickener, an extender pigment, and a plasticizer as described above.

When the organic solvent evaporation drying ink of the present invention contains a non-volatile organic compound (for example, a plasticizer, a dispersant, or the like), in a case where the ink is applied to an object by printing, the content of the non-volatile organic compound with respect to all volatile organic solvents is preferably 10% by weight or less (more preferably 5% by weight or less) in order to prevent a decrease in color change (decrease in coloring density, or the like) of the color-changing material fixed to the object in the presence of water or a water-containing liquid, fading over time after color change, and the like.

(e) The organic solvent evaporation drying ink of the present invention is preferably one in which physical properties such as viscosity (viscosity coefficient) and drying speed are appropriately adjusted according to application equipment such as a printing machine and a coating machine to be applied to a required object. Such adjustment of physical properties can be performed by, in addition to the selection of the main component, selection of components other than the main component such as a thickener, a viscosity modifier, and a defoamer component, increase or decrease in the blending amount, and the like.

(f) Examples of types of the organic solvent evaporation drying ink of the present invention include, but are not limited to, a screen printing ink, a gravure printing ink, a flexographic printing ink, a tampo printing ink, an inkjet ink, a knife coater ink, a reverse coater ink, a roll coater ink, a curtain coater ink, a padding ink, a spray ink, and the like.

For example, the range of the viscosity coefficient of the ink can be adjusted to approximately 5,000 to 50,000 mPa·s (millipascal-seconds) in the case of the screen printing ink, can be adjusted to approximately 100 to 500 mPa·s in the case of the gravure printing ink, can be adjusted to approximately 150 to 1,000 mPa·s in the case of the flexographic printing ink, and the range of the viscosity coefficient can be adjusted according to printing equipment for the other inks.

A general flexographic ink is a hydrophilic ink containing a hydrophilic organic solvent having a solubility parameter ($\delta$) of 12 or more (and, if necessary, water). When the organic solvent evaporation drying ink of the present invention is a flexographic printing ink, it is preferable to use a flexographic printing ink containing 80% by weight or more of a volatile oleophilic organic solvent having a solubility parameter ($\delta$) of 12 or less in order to avoid color development (color change) in contact with a hydrophilic ink vehicle, and more preferable to use a flexographic printing ink containing 80% by weight or more of a volatile oleophilic organic solvent having a solubility parameter ($\delta$) of 11 or less (more preferably 10 or less). In this case, it is desirable to use a flexographic plate used for printing that has resistance to the oleophilic flexographic printing ink.

(g) The organic solvent evaporation drying ink of the present invention can be used for printing or the like using existing application equipment such as a printing machine or a coating machine.

Examples of the printing machine and coating machine that can be used include, but are not limited to, existing screen printing machines, gravure printing machines, flexographic printing machines, tampo printing machines, inkjet printing machines, knife coater coating machines, reverse coater coating machines, roll coater coating machines, curtain coater coating machines, padding machines, spray coating machines, and the like.

By applying the organic solvent evaporation drying ink to an object (substrate) using such equipment, a printed matter, a coated product, or the like in which a color-changing material that can change its color in the presence of water or a water-containing liquid is fixed (that is, having an indicator function) can be obtained.

(7-3) Thermosetting dry offset ink

The thermosetting dry offset ink as the color-changing material of the present invention can be obtained, for example, by dispersion treatment with a mill or the like on a mixture of the color-changeable colorant with a vehicle obtained by combining a plurality of components such as vegetable oil and fat components such as an alkyd resin, a melamine resin, an alkylated melamine resin, an amino resin, an oil-free polyester resin, and a linseed oil, and an aromatic hydrocarbon solvent, having a solubility parameter ($\delta$) of 12 or less. The ink thus obtained can be applied by printing to a 3-piece solder can for metal sheet printing, a 2-piece DR can, and a 2-piece DI can for metal curved surface printing. After printing the ink on the metal can, heat treatment is performed at 250 degrees C to 300 degrees C to obtain a printed matter having a printing layer having a function of being capable of changing color by water or a water-containing liquid on the metal surface.

(7-4) Electrostatic latent image developing toner

The electrostatic latent image developing toner (fine powder) as the color-changing material of the present invention can be obtained, for example, by mixing and containing an oleophilic fixing agent, three components: an electron-donating color-developing organic compound, an electron-accepting compound, and a color development regulator that hampers the color development by the electron-donating color-developing organic compound and the electron-accepting compound and has hydrophilicity (alternatively, a color-changeable composition which includes these three components and can change its color by water or a water-containing liquid) in the fine powder (for example, by hot-melt mixing these components and then finely pulverizing the mixture), or by mixing and containing an oleophilic fixing agent and the color-changeable colorant in the fine powder.

The electrostatic latent image developing toner (fine powder) of the present invention may contain the oleophilic fixing agent (binder resin or the like), and as components other than the three components (or the color-changeable composition) or the color-changeable colorant, for example, various additives such as a charge control agent, the hydrophilic fixing agent, a hydrophilizing agent, a non-color-changeable colorant, an antioxidant, an ultraviolet absorber, and a plasticizer as described above.

(7-5) Crayons or oil pastilles

The crayon or oil pastille as the color-changing material of the present invention can be obtained by, for example, molding after hot-melting WAX or paraffins (oleophilic fixing agent), and three components: an electron-donating color-developing organic compound, an electron-accepting compound, and a color development regulator that hampers the color development by the electron-donating color-developing organic compound and the electron-accepting compound and has hydrophilicity .

(8) Applications of color-changing material

The color-changing material of the present invention can change its color in the presence of water or a water-containing liquid, and can function as an indicator for water or a water-containing liquid. Therefore, by fixing the color-changing material to various objects by printing, coating, or other means, it is possible to accurately detect water and use the color-changing material for a prompt and appropriate response in various applications.

Examples of such applications include, but are not limited to:

    i) applications indicating replacement time or the like by water detection, such as:

        by being provided in a required range of paper diapers for infants and adults, indicating replacement time or the like due to urination and defecation by water detection due to color change, and
        by being provided in a required range of sanitary products or the like, indicating replacement time or the like by water detection due to color change;

    ii) applications indicating a change in quality by water detection, such as:

        by being provided in a required range of a packaging material of a frozen food or an adhesive material (sticker, label, seal, or the like) or a mounting material such as a shrink label for a frozen food, detecting water of condensation generated on a surface by thawing or refreezing during storage or transfer of the frozen food by color change and indicating a change in quality of the food,
by being provided in a required range of a packaging material (including metal can, plastic container, glass container) of a food or a beverage or an adhesive material (sticker, label, seal, or the like) or a mounting material such as a shrink label on a packaging material of a food or food and beverage, detecting condensation or water contact of the packaging material of the food or the food and beverage due to a change in temperature or a change in humidity by color change, thereby indicating a change in quality of the food and beverage, and
by being provided in a required range of a pharmaceutical packaging material (including a blister pack or the like) and a container or an adhesive material (sticker, seal, or the like) or a mounting material such as a shrink label for them, indicating a possibility of quality change or the like by water detection due to color change during storage or transfer of the pharmaceutical product;

iii) an indicator application that is provided by printing or the like at required positions of various products such as electrical appliances, electrical/electronic parts, and precision equipment, or provided in a required range of a packaging material (including a blister pack or the like) thereof or in an adhesive material (sticker, label, seal, curing tape [mainly weakly adhesive], or the like) or a mounting material such as a shrink label for them, and detects condensation and submersion of the product due to a change in temperature or a change in humidity by color change, thereby indicating a product trouble including a contact failure and a leakage accident or the like in advance or early;
iv) applications such as water management and moisture absorption management indicating water detection due to color change, by being provided in a required range of a packaging material, a sticker, a container, or the like;
v) applications of certificates or certification articles having security function, various paper products, and the like (for example, printing on a certificate of seal impression, certificate of residence, securities, New Year's cards, summer greeting cards, and the like) that change their colors by water or a water-containing liquid to show words, patterns, or the like;
vi) applications as a water lot that is provided at shrines and temples and the like and changes its color by water or a water-containing liquid to show words, patterns, or the like, or toys that change their colors by water or a water-containing liquid to show words, patterns, or the like (for example, a doll simulating simulated urination, a target of a water gun, or the like); and the like.

[EXAMPLES]

The present invention is hereinafter described by means of the following Examples, which, however, are not to be construed as limiting the present invention. In the descriptions below, part(s) and % mean part(s) by weight and % by weight, respectively.

[Preparation of Color-changeable composition A]

In a 1-liter volume heat-resistant glass container,

4 parts of 3-(4-diethylaminophenol)-3-(1-ethyl-2-methylindol-3-yl)phthalide [electron-donating color-developing organic compound: blue leuco dye],
16 parts of 4,4'-(1,3-dimethylbutylidene)bisphenol [electron-accepting compound: solubility parameter $\delta 1 = 11.88$], and
36 parts of polyethylene glycol 400 [color development regulator: solubility parameter $\delta 2 = 11.1$, vapor pressure $9 \times 10^{-5}$ mmHg [100 degrees C], solubility in water = $\infty$]
were mixed, then the mixture was heated to 100 degrees C and further mixed to obtain Color-changeable composition A which is liquid and can change its color in the presence of water or a water-containing liquid ($\delta 1 - \delta 2 = 0.78$).

[Preparation of Color-changeable colorant B]

In a 1-liter volume heat-resistant glass container,

4 parts of 3-(4-diethylaminophenol)-3-(1-ethyl-2-methylindol-3-yl)phthalide [electron-donating color-developing organic compound: blue leuco dye],
16 parts of 4,4'-(1,3-dimethylbutylidene)bisphenol [electron-accepting compound: solubility parameter $\delta 1 = 11.88$], and
36 parts of polyethylene glycol 400 [color development regulator: solubility parameter $\delta 2 = 11.1$, vapor pressure $9 \times 10^{-5}$ mmHg [100 degrees C], solubility in water = $\infty$]
were mixed, then the mixture was heated to 100 degrees C and further mixed to prepare a liquid composition ($\delta 1 - \delta 2 = 0.78$).

Then, in another 2-liter volume heat-resistant glass container,

44 parts of SIPERNAT 820A [trade name ("SIPERNAT" is a trademark)] (powdered white porous substance: $SiO_2AL_2O_3$ manufactured by EVONIK, pH: 8.7, pore volume = 0.47 cm³/g, average pore diameter = 200 angstrom)
was weighed, and while the powdered porous substance was heated to 110 degrees C and stirred with a mixer, the liquid composition at 100 degrees C was gradually added to the powdered porous substance and sufficiently stirred to obtain a white powder in which the composition was carried by the porous substance.

The resulting white powder was identified as a powdery colorant that instantaneously changes its color from white to dark blue when fed with water (liquid) (Color-changeable colorant B).

Example 1

20 Parts of DIANAL BR-115 [trade name ("DIANAL" is a trademark)] (manufactured by Mitsubishi Chemical Corporation, acrylic resin, solubility parameter $\delta 9.80$),
40 parts of toluene (solubility parameter $\delta 9.13$, boiling point 110.6 degrees C),
19.5 parts of methylcyclohexane (solubility parameter $\delta 5.27$, boiling point 101 degrees C),
0.5 parts of DAPPO SN-510 [trade name ("DAPPO" is a trademark)] (manufactured by SAN NOPCO LIMITED, defoamer), and
20 parts of Color-changeable colorant B
were uniformly mixed with a stirrer, and then dispersed with an attritor mill machine to obtain a gravure ink having a viscosity of 460 mPa·s.

The obtained gravure ink was printed on a 50 $\mu$m-thick milky white polyester film using a full-surface plate having 150 lines/inch and a depth of 30 $\mu$m.
The color of the printed matter thus obtained was not particularly different from the color of the original milky white polyester film. However, when a drop of water was dropped on the gravure ink printing layer of the film, a bright blue color was developed, and the printed matter was excellent in visibility as a water indicator.

Example 2

A gravure ink having a viscosity of 370 mPa·s was obtained by treating in the same manner as in Example 1 except for changing the amount of DIANAL BR-115 to 25 parts, the amount of toluene to 38.5 parts, and the "20 parts of Color-changeable colorant B" in Example 1 to "16.5 parts of Color-changeable composition A". However, this gravure ink was not considered to have good stability because the ink was separated slightly over time.
A printed matter obtained by printing the obtained gravure ink in the same manner as in Example 1 had a slight blueness as a residual color with respect to the original milky white polyester film color. However, when a drop of water was dropped on the gravure ink printing layer of the film, a bright blue color was developed, and the printed matter showed function as a water indicator while the density difference before and after the color developed by water was inferior to that in Example 1.

Example 3

> 20 Parts of DIANAL BR-115 (acrylic resin, solubility parameter $\delta$9.80),
> 20 parts of methylcyclohexane (solubility parameter $\delta$5.27, boiling point 101 degrees C),
> 29.5 parts of propylene glycol monomethyl ether acetate (boiling point 146 degrees C, solubility parameter $\delta$8.73),
> 0.5 parts of DAPPO SN-510 (defoamer), and
> 30 parts of Color-changeable colorant B
> were uniformly mixed with a stirrer, and then dispersed with an attritor mill machine to obtain a flexographic ink having a viscosity of 820 mPa·s.

The obtained flexographic ink was printed on a 15 $\mu$m-thick milky white polyethylene film using a 300 lines/inch anilox roll using a full-surface plate.

The color of the printed matter thus obtained had no residual color and was not particularly different from the color of the original milky white polyethylene film. However, when a drop of water was dropped on the flexographic ink printed layer of the film, a bright blue color was developed, and the printed matter was excellent in visibility as a water indicator.

Example 4

A flexographic ink having a viscosity of 790 mPa·s was obtained by treating in the same manner as in Example 3 except for changing the amount of Color-changeable colorant B in Example 1 to 27 parts and adding "3 parts of urea (hydrophilizing agent)".

The color of the obtained printed matter had no residual color and was not particularly different from the color of the original milky white polyethylene film. However, when a drop of water was dropped on the flexographic ink printed layer of the film, a bright blue color was quickly developed as compared with both Example 1 and Example 3, and the printed matter was excellent in visibility and color development speed as a water indicator.

Example 5

> 2 Parts of Tuftec M1913 [trade name ("Tuftec" is a trademark)] (manufactured by Asahi Kasei Corporation, styrene-butadiene resin, solubility parameter $\delta$9.20),
> 10 parts of YS Resin TO-85 [trade name] (manufactured by Yasuhara Chemical Co., Ltd., terpene resin, solubility parameter $\delta$10.0),
> 57.5 parts of toluene (solubility parameter $\delta$9.13, boiling point 110.6 degrees C),
> 0.5 parts of DAPPO SN-510 (defoamer), and
> 30 parts of Color-changeable colorant B
> were uniformly mixed with a stirrer, and then dispersed with an attritor mill machine to obtain a flexographic ink having a viscosity of 290 mPa·s.

The obtained flexographic ink was printed on a 15 $\mu$m-thick milky white polyethylene film using a 300 lines/inch anilox roll having solvent resistance and a full-surface plate using a polka dot plate.

The color of the printed matter thus obtained had no residual color and was not particularly different from the color of the original milky white polyethylene film. However, when a drop of water was dropped on the flexographic ink printed layer of the film, a bright blue color polka dot pattern was developed, and the printed matter was excellent in visibility as a water indicator.

Furthermore, when the obtained film was applied as a film on the outer side of a paper diaper, a blue polka dot pattern was developed upon urination, by using fixing agents that make the printed layer flexible (Tuftec M1913 and YS Resin TO-85) for the flexographic ink, so that no undesirable warpage or curl was observed in the film used for the paper diaper, and the film was very suitable as a water indicator for paper diaper.

Example 6

The flexographic ink obtained in Example 5 was printed on a 15 $\mu$m-thick milky white polyester shrink film by a polka dot flexographic plate using a 300 lines/inch anilox roll.

The obtained printed matter had no residual color of the ink, and the polka dot pattern printed on the milky white film was hardly visible.

The film was wound around a beverage bottle and subjected to a heat shrink treatment, thereby obtaining a beverage bottle in which the film applied with the printing ink on the surface side was wound and fixed.

When the beverage bottle was cooled in a refrigerator and then returned to normal temperature, dew condensation water was generated on the surface of the beverage bottle (the surface side of the film), and due to the dew condensation water, a blue polka dot pattern appeared on the flexographic ink printed layer of the milky white film on the beverage bottle, and the film functioned as a water indicator.

Example 7

25 Parts of VYLON 200 [trade name ("VYLON" is a trademark)] (manufactured by Toyobo Co., Ltd., solubility parameter $\delta$10.5, saturated polyester resin),
30 parts of C-100 [trade name] (manufactured by Cosmo Oil Co., Ltd., boiling point 150 degrees C, solubility parameter $\delta$9.07, aromatic hydrocarbon),
24 parts of propylene glycol monomethyl ether acetate (boiling point 146 degrees C, solubility parameter $\delta$8.73),
1 part of silicone TSE 350 [trade name] (manufactured by Momentive Performance Materials Inc., silicone-based defoamer), and
20 parts of Color-changeable colorant B
were mixed with a mixer, and then dispersed with a three-roll mill to obtain a screen ink having a viscosity of 7,400 mPa·s.

The obtained screen ink was screen-printed on white paper using a 150 mesh screen plate of characters and patterns of water lots.
In the printed matter thus obtained, there was no residual color of the printing ink, and the characters and patterns of water lots were hardly visually recognized. However, when the printed matter was floated on water, clear blue characters and patterns of the water lots appeared.

Example 8

An undercoat ink comprising

25 parts of VYLON 200 (solubility parameter $\delta$10.5, saturated polyester resin),
30 parts of C-100 (boiling point 150 degrees C, solubility parameter $\delta$9.07, aromatic hydrocarbon),
24 parts of propylene glycol monomethyl ether acetate (boiling point 146 degrees C, solubility parameter $\delta$8.73),
1 part of silicone TSE 350 (silicone-based defoamer), and
5 parts of SIPERNAT 820A (powdered white porous substance: $SiO_2AL_2O_3$, pH: 8.7, pore volume = 0.47 cm$^3$/g, average pore size = 200 angstrom)
was screen-printed on the entire surface of white paper in advance.

After the undercoat ink was dried, the screen ink obtained in Example 7 was screen-printed on the undercoat ink layer in the same manner as in Example 7.
In the printed matter thus obtained, there was no residual color of the printing ink, and the characters and patterns of water lots were hardly visually recognized. However, when the printed matter was floated on water, clear blue characters and patterns of the water lots appeared.
Further, as compared with the printed matter obtained in Example 7, this printed matter was prevented from being adversely affected by water due to moisture absorption of paper (white paper) during storage (for example, traces of the characters and patterns of the water lots become slightly visible before floating on water), and was more excellent in stability.

Example 9

32.8 Parts of YS Resin TO-85 (terpene resin, solubility parameter $\delta$10.0),
45 parts paraffin Wax-115 [trade name] (manufactured by Nippon Seiro Co., Ltd., solubility parameter $\delta$8.8, paraffin WAX),
2 parts of UNITHOX 450 [trade name ("UNITHOX" is a trademark)] (manufactured by Petrolite Corporation, hydrophilizing agent), and
0.2 parts of KS-7716 [trade name] (silicone-based defoamer), and
20 parts of Color-changeable colorant B
were mixed in a state of being heated to 100 degrees C and dissolved, and uniformly dispersed with a mill machine to obtain a hot-melt ink having a viscosity of 600 mPa·s (70 degrees C).

The obtained hot-melt ink was gravure-printed on a 15 $\mu$m-thick milky white polyethylene film using a polka dot hot-melt ink printer having 120 lines/inch and a depth of 40 $\mu$m.
In the printed matter thus obtained, the polka dot pattern was hardly visually recognized on the milky white polyethylene film, but the printed matter had a water color-changeable indicator function in which a blue polka dot pattern quickly appeared when water was dropped on the hot-melt ink printing layer of the film.
In addition, when the obtained printed matter was applied as an outermost film layer of a paper diaper with a printed surface positioned on the water absorbing layer side, a paper diaper having an indicator function in which a blue polka dot pattern appeared by urination was obtained.

Example 10

Using the hot-melt ink obtained in Example 9, a line pattern with a width of 5 mm was printed in-line on a 15 $\mu$m-thick milky white polyethylene film using a hot-melt heat applicator provided in a paper diaper production machine.
The printed matter thus obtained was applied as an outermost film layer of a paper diaper with a printed layer disposed on the water absorbing layer side, and had a water indicator function in which a blue line pattern appeared inside an outermost milky white film by urination.

Example 11

The hot-melt ink obtained by adding 0.1 parts of food dye Red No. 102 to 100 parts of the hot-melt ink in Example 9 was gravure printed on a 15 $\mu$m-thick milky white polyethylene film in the same manner as in Example 9.

The printed matter thus obtained had a pink polka dot pattern printed on the milky white polyethylene film, but had a water color-changeable indicator function in which the pink polka dot pattern quickly changed its color to purple when water was dropped on the hot-melt ink printing layer of the film.

Comparative Example 1

In a 1-liter volume heat-resistant glass container,

4 parts of 3-(4-diethylaminophenol)-3-(1-ethyl-2-methylindol-3-yl)phthalide [electron-donating color-developing organic compound: blue leuco dye],
16 parts of 4,4'-(1,3-dimethylbutylidene)bisphenol [electron-accepting compound: solubility parameter $\delta 1$ = 11.88], and
36 parts of polyethylene glycol 400 [color development regulator: solubility parameter $\delta 2$ = 11.1, vapor pressure $9 \times 10^{-5}$ mmHg [100 degrees C], solubility in water = $\infty$]
were mixed, then the mixture was heated to 100 degrees C and further mixed to prepare a liquid composition ($\delta 1$- $\delta 2$ = 0.78).

Then, in another 2-liter volume heat-resistant glass container,

44 parts of SYLYSIA 350 [trade name ("SYLYSIA" is a trademark)] (powdered white porous substance: SiO$_2$ manufactured by Fuji Silysia Chemical Ltd., pH: 5.96, pore volume = 1.6 cm$^3$/g, average pore diameter = 210 angstrom)
was weighed, and while the powdered porous substance was heated to 110 degrees C and stirred with a mixer, the liquid composition at 100 degrees C was gradually added to the powdered porous substance and sufficiently stirred to obtain a powder in which the composition was carried by the porous substance, but the powder was already colored in blue.

Comparative Example 2

10 Parts of NEWMIDE 846 [trade name ("NEWMIDE" is a trademark)] (manufactured by Harima Chemicals, Inc., polyamide resin, solubility parameter $\delta 12.2$),
50 parts of propylene glycol methyl ether (solubility parameter $\delta 11.27$, boiling point 121 degrees C),
9.5 parts of propyl alcohol (solubility parameter $\delta 11.58$, boiling point 97 degrees C),
0.5 parts of DAPPO SN-510 (defoamer), and
30 parts of Color-changeable colorant B
were uniformly mixed with a stirrer, and then dispersed with an attritor mill machine to obtain a flexographic ink having a viscosity of 520 mPa·s.

The obtained flexographic ink was printed on a 15 $\mu$m-thick milky white polyethylene film using a 300 lines/inch anilox roll using a full-surface plate.

In the printed matter thus obtained, a residual blue color was slightly generated, but when a drop of water was dropped on the flexographic ink printed layer of the film, a bright blue color was developed, and thereafter, the blue color faded over time. That is, this printed matter had visibility as a water indicator, but was poor in temporal maintainability of color development.

Comparative Example 3

10 Parts of NEWMIDE 846 (polyamide resin, solubility parameter $\delta 12.2$),
50 parts of ethanol (solubility parameter $\delta 12.57$, boiling point 78.4 degrees C),
9.5 parts of propyl alcohol (solubility parameter $\delta 11.58$, boiling point 97 degrees C),
0.5 parts of DAPPO SN-510 (defoamer), and
30 parts of Color-changeable colorant B
were uniformly mixed with a stirrer, and then dispersed with an attritor mill machine to obtain a flexographic ink having a viscosity of 490 mPa·s and having a blue appearance.

When the obtained flexographic ink was printed on a 15 $\mu$m-thick milky white polyethylene film using a 300 lines/inch anilox roll using a full-surface plate, the obtained printed matter had a strong residual color, and a blue full-surface pattern was printed on the milky white polyethylene film.

When a drop of water was dropped on the flexographic ink printing layer of the film, the blue color became darker, but the visibility as a water indicator was insufficient.

Comparative Example 4

25 Parts of VYLON 200 (solubility parameter $\delta 10.5$, saturated polyester resin),
30 parts of N-methylpyrrolidone (boiling point 202 degrees C, solubility parameter $\delta 11.2$),

24 parts of N,N-dimethylformamide (boiling point 153 degrees C, solubility parameter δ12.1), 1 part of silicone TSE 350 (silicone-based defoamer), and 20 parts of Color-changeable colorant B were mixed with a mixer, and then dispersed with a three-roll mill to obtain a screen ink having a blue appearance and a viscosity of 8,200 mPa·s.

When the screen ink was screen-printed on white paper using a 150 mesh screen plate of characters and patterns of water lots, the obtained printed matter developed blue color as a residual color.

When the printed matter was floated on water, a darker blue color was developed, but the visibility as a water indicator was insufficient, and the blue color was decolorized over time.

**Claims**

1. A color-changing material which is a composition comprising an electron-donating color-developing organic compound, an electron-accepting compound, and a color development regulator that hampers the color development by the electron-donating color-developing organic compound and the electron-accepting compound and has hydrophilicity, and a fixing material containing an oleophilic fixing agent for fixing to an object,
in which the color-changing material can change its color in the presence of water or a water-containing liquid.

2. The color-changing material as described in claim 1, which can change its color in the presence of water or a water-containing liquid in a state of being fixed to the object.

3. The color-changing material as described in claim 1 or 2, in which the color development regulator has a solubility parameter (δ) of 10 or more, and a difference in solubility parameter (δ) between the electron-accepting compound and the color development regulator is between plus and minus 3.

4. The color-changing material as described in any one of claims 1 to 3, in which the oleophilic fixing agent has a solubility parameter (δ) of 12 or less.

5. The color-changing material as described in any one of claims 1 to 4, in which 80% by weight or more of an oleophilic fixing agent having a solubility parameter (δ) of 12 or less is contained in all fixing agents contained in the fixing material, and the electron-donating color-developing organic compound, the electron-accepting compound, and the color development regulator and the all fixing agents are uniformly mixed.

6. The color-changing material as described in claim 5, in which the oleophilic fixing agent having a solubility parameter (δ) of 12 or less is one kind or two or more kinds selected from the group consisting of an acrylic resin, a methacrylic resin, a urethane resin, a styrene-butadiene copolymer resin, an ethylene-vinyl acetate resin, a polyethylene resin, a styrene resin, a polyester resin, a petroleum resin, a rosin acid ester, a microstalline WAX, a paraffin WAX, and a polyethylene WAX.

7. The color-changing material as described in any one of claims 1 to 6, in which the fixing material containing an oleophilic fixing agent is a vehicle in which the oleophilic fixing agent is dissolved or dissolved and dispersed in a volatile organic solvent.

8. The color-changing material as described in claim 7, in which both the oleophilic fixing agent and the volatile organic solvent have a solubility parameter (δ) of 12 or less.

9. The color-changing material as described in claim 7 or 8, in which all fixing agents in the fixing material are dissolved or dissolved and dispersed in a volatile organic solvent having a boiling point of 200 degrees C or less, and
80% by weight or more of the volatile organic solvent having a boiling point of 200 degrees C or less and a solubility parameter (δ) of 12 or less is contained in all volatile organic solvents contained in the fixing material.

10. The color-changing material as described in any one of claims 1 to 9, which is a hot melt printing ink, an organic solvent evaporation drying printing ink, a thermosetting dry offset ink, or an electrostatic latent image developing toner.

11. A color-changeable colorant comprising a color-changeable composition comprising at least an electron-donating color-developing organic compound, an electron-accepting compound, and a color development regulator that hampers the color development by the electron-donating color-developing organic compound and the electron-accepting compound and has hydrophilicity, that can change its color in the presence of water or a water-containing liquid, in which the color-changeable composition is retained or carried by a specified microbody and can change its color in the presence of water or a water-containing liquid.

12. The color-changeable colorant as described in claim 11, in which the specified microbody is such that water or a water-containing liquid can come into contact with the retained or carried color-changeable composition.

**13.** The color-changeable colorant as described in claim 11 or 12, in which at least a portion of the specified microbody that retains or carries the color-changeable composition exhibits basicity or neutrality.

**14.** The color-changeable colorant as described in any one of claims 11 to 13, in which the specified microbody is a porous substance.

**15.** The color-changeable colorant as described in claim 14, in which the pore volume of the porous substance is not less than 0.3 cm$^3$/g.

**16.** The color-changeable colorant as described in claim 14 or 15, in which the average pore diameter of the porous substance is not less than 20 angstroms.

**17.** A color-changing material containing the color-changeable colorant as described in any one of claims 11 to 16 and a fixing material containing an oleophilic fixing agent for fixing to an obj ect, in which the color-changing material can change its color in the presence of water or a water-containing liquid.

**18.** The color-changing material as described in claim 17, which can change its color in the presence of water or a water-containing liquid in a state of being fixed to the object.

**19.** The color-changing material as described in claim 17 or 18, which is a hot melt printing ink, an organic solvent evaporation drying printing ink, a thermosetting dry offset ink, or an electrostatic latent image developing toner.

**20.** An article formed by fixing the color-changing material that can change its color in the presence of water or a water-containing liquid as described in any one of claims 1 to 9 and 17 and 18.

## INTERNATIONAL SEARCH REPORT

| International application No. |
| --- |
| **PCT/JP2021/030697** |

**A. CLASSIFICATION OF SUBJECT MATTER**

*C09D 11/037*(2014.01)i; *C09B 57/00*(2006.01)i; *C09B 67/20*(2006.01)i
FI: C09B67/20 F; C09B57/00 C; C09D11/037

According to International Patent Classification (IPC) or to both national classification and IPC

**B. FIELDS SEARCHED**

Minimum documentation searched (classification system followed by classification symbols)

C09D1/00-201/10; C09B57/00; C09B67/20; G01N21/81; G01N31/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 2011/0144603 A1 (SONG, Xuedong) 16 June 2011 (2011-06-16) claims 1, 4, paragraphs [0006], [0018]-[0019], [0028], [0031], [0033], [0040], fig. 1-2, example 1 | 1-3, 7-10, 20 |
| Y | claims 1, 4, paragraphs [0006], [0018]-[0019], [0028], [0031], [0033], [0040], fig. 1-2, example 1 | 4-6, 11-20 |
| Y | JP 2007-40871 A (TORISHIGE SANGYO CO LTD) 15 February 2007 (2007-02-15) claims, paragraphs [0019]-[0020] | 11-12, 14-20 |
| Y | JP 2020-85473 A (PIATEKKU KK) 04 June 2020 (2020-06-04) claims, paragraph [0026], examples | 11-12, 14-20 |
| Y | JP 8-92511 A (TOPPAN PRINTING CO LTD) 09 April 1996 (1996-04-09) paragraph [0023] | 4-6 |
| Y | claims, paragraphs [0014]-[0015], examples | 11-20 |
| A | JP 2018-517894 A (SAVARE' I.C. S.R.L) 05 July 2018 (2018-07-05) entire text | 1-20 |

☑ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 October 2021** | **09 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| | International application No. |
|---|---|
| | **PCT/JP2021/030697** |

### C. DOCUMENTS CONSIDERED TO BE RELEVANT

| Category* | Citation of document, with indication, where appropriate, of the relevant passages | Relevant to claim No. |
|---|---|---|
| A | US 2013/0116644 A1 (WEI, Ning) 09 May 2013 (2013-05-09)<br>entire text, all drawings | 1-20 |
| A | JP 2012-230044 A (KYODO PRINTING CO LTD) 22 November 2012 (2012-11-22)<br>entire text | 1-20 |
| A | JP 2011-185745 A (KYODO PRINTING CO LTD) 22 September 2011 (2011-09-22)<br>entire text, all drawings | 1-20 |
| A | JP 2011-16872 A (PILOT INK CO LTD) 27 January 2011 (2011-01-27)<br>entire text, all drawings | 1-20 |
| E, X | WO 2021/176574 A1 (MATSUI SHIKISO KAGAKU KOGYOSHO) 10 September 2021 (2021-09-10)<br>claims, paragraphs [0091]-[0094], examples | 1-20 |

Form PCT/ISA/210 (second sheet) (January 2015)

EP 4 389 831 A1

**INTERNATIONAL SEARCH REPORT**
**Information on patent family members**

International application No.

**PCT/JP2021/030697**

| Patent document cited in search report | | | Publication date (day/month/year) | Patent family member(s) | Publication date (day/month/year) |
|---|---|---|---|---|---|
| US | 2011/0144603 | A1 | 16 June 2011 | WO 2011/073807 A2 claims 1, 4, p. 2, lines 17-24, p. 5, line 18 to p. 6, line 4, p. 9, lines 15-25, p. 10, lines 11-13, p. 10, lines 18-24, p. 12, line 25 to p. 13, line 4, fig. 1-2, example 1 | |
| JP | 2007-40871 | A | 15 February 2007 | (Family: none) | |
| JP | 2020-85473 | A | 04 June 2020 | (Family: none) | |
| JP | 8-92511 | A | 09 April 1996 | (Family: none) | |
| JP | 2018-517894 | A | 05 July 2018 | US 2016/0303275 A1 entire text | |
| US | 2013/0116644 | A1 | 09 May 2013 | WO 2013/068859 A1 entire text, all drawings | |
| JP | 2012-230044 | A | 22 November 2012 | (Family: none) | |
| JP | 2011-185745 | A | 22 September 2011 | (Family: none) | |
| JP | 2011-16872 | A | 27 January 2011 | (Family: none) | |
| WO | 2021/176574 | A1 | 10 September 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003183546 A
- JP 2005185643 A
- JP 4607350 B
- JP 6767021 B
- JP 5996400 B